# EUROPEAN PATENT SPECIFICATION

(11) **EP 1 056 956 B1**
(45) Date of publication and mention of the grant of the patent: **31.07.2002**
(21) Application number: 99906334.0
(22) Date of filing: 22.02.1999
(51) Int. Cl.: F16D 3/52, F16D 3/14

(54) **COMPLIANT COUPLING**
FEDERNDE KUPPLUNG
ACCOUPLEMENT CONFORMABLE

(30) Priority: 27.02.1998 GB 9804076
(43) Date of publication of application: 06.12.2000
(73) Proprietor: Ford Global Technologies, Inc., Dearborn, Michigan 48331 (US)
(72) Inventor: HOFMANN, Dietrich A., Newcastle NE19 2RZ (GB); ROSINSKI, Jarek, Newcastle NE20 9AH (GB)
(74) Representative: Messulam, Alec Moses
(86) International application number: GB9900538
(87) International publication number: WO9943965

(56) References cited:
- EP-A- 0 190 626
- EP-A- 0 517 184
- CH-A- 129 661
- DE-A- 4 407 157
- DE-C- 718 377
- GB-A- 1 084 240
- US-A- 4 614 257

## Description

### Field of the invention

The present invention relates to a coupling for providing a compliant connection between a shaft and a driving element such as a sprocket or gear mounted on the shaft. The coupling of the invention finds particular application in sprocket and chain drives which are subject to shock loads or sharply varying input torques.

### Background of the invention

This invention arose out of an investigation of excessive wear in the chain and sprocket drive for balance shafts in a diesel engine. The particular chain drive investigated had a tortuous chain path around a crankshaft, providing the driving torque, two balance shafts, an idler sprocket and a oil pump drive sprocket. It was found that high loads were occurring in the drive system at idle and low engine speeds and that these high loads were attributable to acceleration pulses at the crankshaft following combustion events in the engine. It is known that durability problems occur in such systems and many expensive measures have been used to improve durability and overcome premature wear, including duplex chains with offset teeth and sprockets with cushion rings.

Resilient couplings for drive pulleys are known, see EP 0 517 184 (Tesma) but such couplings would likely excite resonances in the system at certain speeds and such resonances may well exacerbate the wear problems. DE 718377 shows a resilient coupling with friction damping but both spring rate and friction would be the same for both directions of deflection.

### Object of the invention

It is an object of the invention to provide a coupling capable of reducing transmission of shock loads to the driven element and reducing resonance in a drive system following displacement of the coupling by a shock loads.

### Summary of the invention

According to the invention a coupling for connecting a sprocket or other driving element to a shaft, the driving element being mounted on the shaft for rotation relative thereto, comprising a coil spring providing a driving connection between the shaft and the driving element and arranged to bias the driving element to an intermediate position relative to the shaft; characterised by friction means having inwardly facing contact areas in pressure contact with the coil spring, arranged to damp movement of the driving element relative to the shaft.

Preferably the spring means has a higher spring rate for displacement of the driving element from the intermediate position in advance of the shaft than for displacement of the shaft in advance of the driving element.

### Brief description of the drawings

The invention will now be described further, by way of example, with reference to the accompanying drawings, in which:
Figure 1 is an exploded sectional side view, along the section line A-A of Figure 4, of a compliant coupling embodying the invention;
Figure 2 is a part section side view, along the section line B-B of Figure 4, of the compliant coupling of Figure 1;
Figure 3 is a front view of a chain and sprocket drive in an internal combustion engine showing an application for the coupling of the invention;
Figures 4 is a section along the line C-C of Figure 2 showing the friction means and spring means of the invention;
Figure 5 is a graph showing the deflection characteristic of the coupling of Figure 1; and
Figures 6 and 7 are waterfall diagrams showing the variation of torque at different engine speeds for the engine of Figure 3 with (Figure 7) and without (Figure 6) the compliant coupling of the invention.

### Detailed description of the drawings

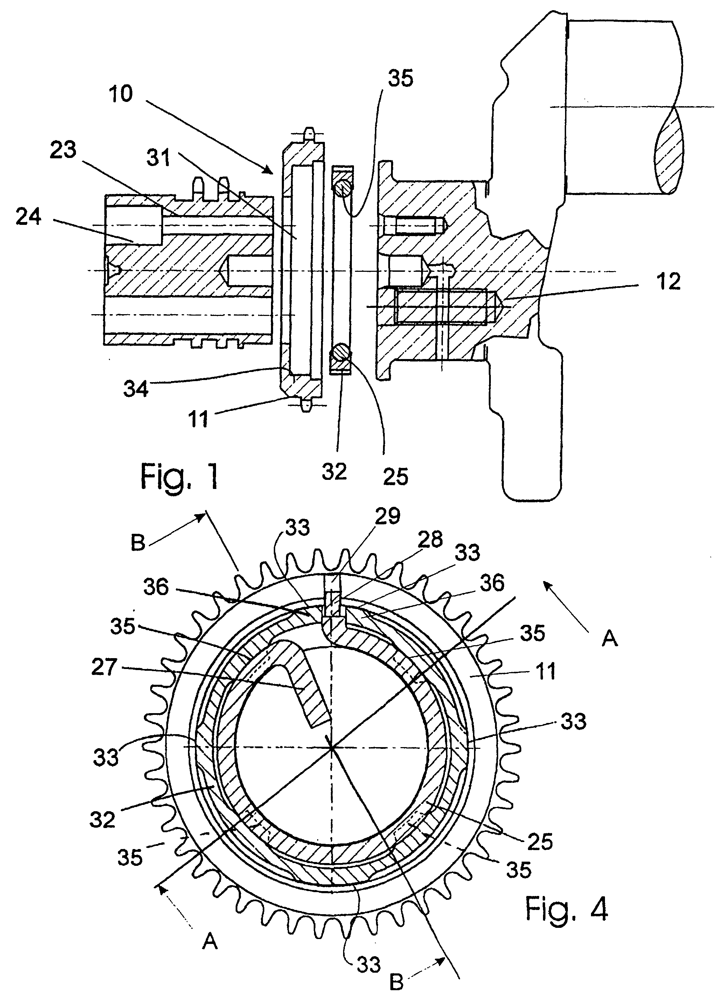

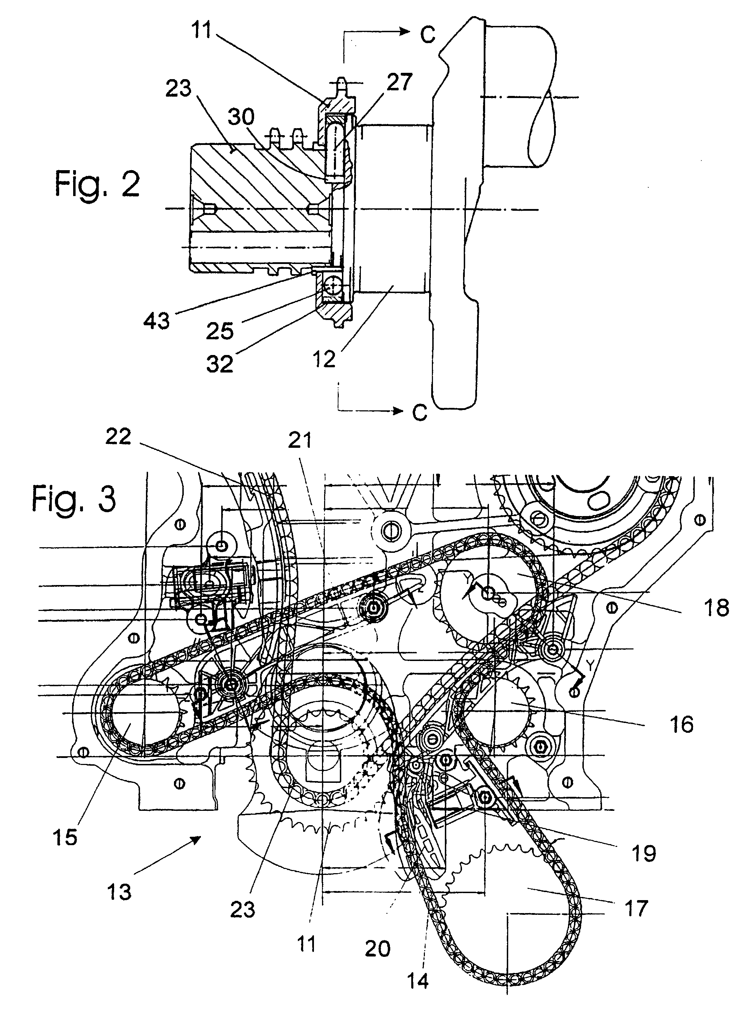

A compliant coupling 10 (Figures 1 and 2) connects a driving element (sprocket 11) to a crankshaft 12 of an internal combustion diesel engine 13 (Figure 3). A simplex chain 14 around the sprocket 11 drives balancer shafts 15 and 16, and oil pump 17 and extends around an idler sprocket 18. The sprocket drive system includes tensioners 19, 20 and 21.

A duplex chain 22 driven from a duplex sprocket 23 mounted on the end of the crankshaft 12 drives the engine valve gear (not shown).

As can be seen clearly in Figure 3, the simplex chain follows a tortuous path. Simplex chain and sprocket drives in engines of this type are prone to wear, durability and noise problems in spite of complex tensioning and damping means 19, 20 and 21. The compliant coupling 10 of the invention reduces wear and noise and improves durability.

The sprocket 11 is mounted between the end of the crankshaft 12 and the duplex sprocket 23. The duplex sprocket is fixed to the crankshaft by bolts (not shown) through bores 24. A bearing ring 43 supports sprocket 11 for rotation relative to the crankshaft.

A spring 25 is mounted in an annular recess 31 within the simplex sprocket 11 and bounded by the end of the crankshaft 12 and the duplex sprocket 23. The spring 25 provides a driving connection between the crankshaft 12 and the sprocket 11. The spring 25 comprises a single flat coil 26 of round wire, with one end 27 directed radially inwardly and the other end 28 directly radially outwardly. The outwardly directed end 28 is seated in a recess 29 in the sprocket 11 and the inwardly directed end 27 is clamped in a radially extending recess 30 between the end of the crankshaft 12 and the duplex sprocket 23. The spring 25 biases the sprocket 11 to an intermediate, or rest position relative to the crankshaft. Angular movement of the sprocket relative to the crankshaft is possible against spring bias, causing spring 25 to either wind or unwind. There is sufficient clearance inwardly and outwardly of the spring 25 to allow angular displacement from the rest position in the driving direction (wind up of the spring) of about 8 degrees and in the opposite direction (unwinding the spring 25) of about 5 degrees.

Friction means in the form of a split friction ring 32 is assembled between the spring 25 and the sprocket 11 within the annular recess 31. The friction ring 32 is made of nylon or other resilient wear resistant material. It has outer pads 33 formed to conform to a cylindrical inner surface 34 of the sprocket 11 and inner pads 35, radially spaced from the outer pads and shaped to conform to the outer surface of the spring 25. The free ends 36 of the friction ring 32 are shaped to embrace and conform to the outwardly direct end 28 of the spring 25. The friction ring is sized so as to fit snugly within the sprocket with the free ends 36 in contact with the spring end 28.

The outer pads 33 of the friction ring 32 are slightly oversized relative to the bore in the sprocket that they engage. Also, the inner pads 35 of the friction ring 32 are slightly radially undersized relative to the spring 25. The degree of interference between the pads 33 and the sprocket bore and the between pads 35 and the spring being dependent on the degree of damping required, but typically the oversize and undersize is of the order of 0.2 to 0.6 on radius. During assembly the spring is wound up a few degrees, and then released, thereby achieving a pre-load between the spring and the inner pads 35 and so that the outer pads 33 are urged into pressure contact with the sprocket inner surface. It will be noted that the pre-load ensures that any movement of the sprocket relative to the shaft is damped in either direction.

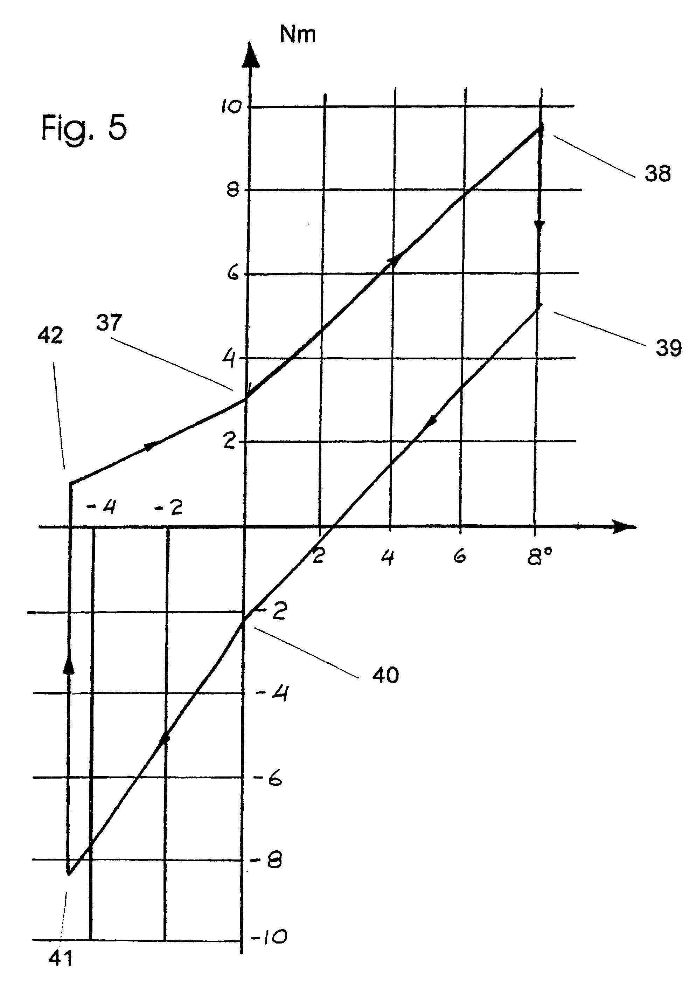

The spring 25 is arranged so that when transmitting torque in the driving direction (clockwise in Figure 4), the crankshaft advances a few degrees relative to the sprocket and the spring is wound up decreasing pressure contact with the friction ring 32 so that friction decreases. If the sprocket rotates ahead of the crankshaft (this may be caused by inertia in the driven elements of the system), the crankshaft lags the sprocket by a few degrees and the spring unwinds a few degrees, increasing pressure contact of the spring with the friction ring so that friction increases. The spring rate also increases since the spring has to work against the resilience of the friction ring. The spring rate for wind up is lower than for unwind from the rest position since the pre-load in the friction ring 32 acts in a direction to assist wind up but to oppose unwind.

The angular deflection characteristic of the compliant sprocket of the invention is shown in Figure 5, in which torque applied to the coupling is plotted along the y-axis against angle of deflection along the x-axis. From the rest position (the origin on the graph) with no applied torque and no deflection, increasing torque initially results in no deflection until at point 37, about 3 Nm of torque overcomes the friction between spring 25 and friction ring 32. Further torque increase up to about 9 Nm produce a proportional deflection (37 to 38 on the graph). When torque is reduced from 9Nm the deflection initially remains unchanged until there is a sufficient reduction in torque for the spring to overcome the friction between it and the friction ring (at point 39 on the graph). Deflection then reduces along a substantially parallel line 39 to 40 as the spring assisted by about 2 Nm torque in the reverse direction restores the coupling to the rest position. More negative torque causes linear deflection along line 40 to 41. At this point friction is at its greatest since the spring has expanded outwardly into increased pressure contact with the friction ring. This friction prevent restoration towards the rest position until a small positive torque is applied (point 42). Increasing torque restores the coupling fully to its rest position along line 42 to 37. Note that there is considerable hysteresis in the characteristic ensuring excellent damping of any tendency for oscillations of the sprocket and chain relative to the crankshaft. Also the spring rate is significantly steeper for negative deflections than for positive. This discourages any resonance effects since the resonant frequency changes during the deflections.

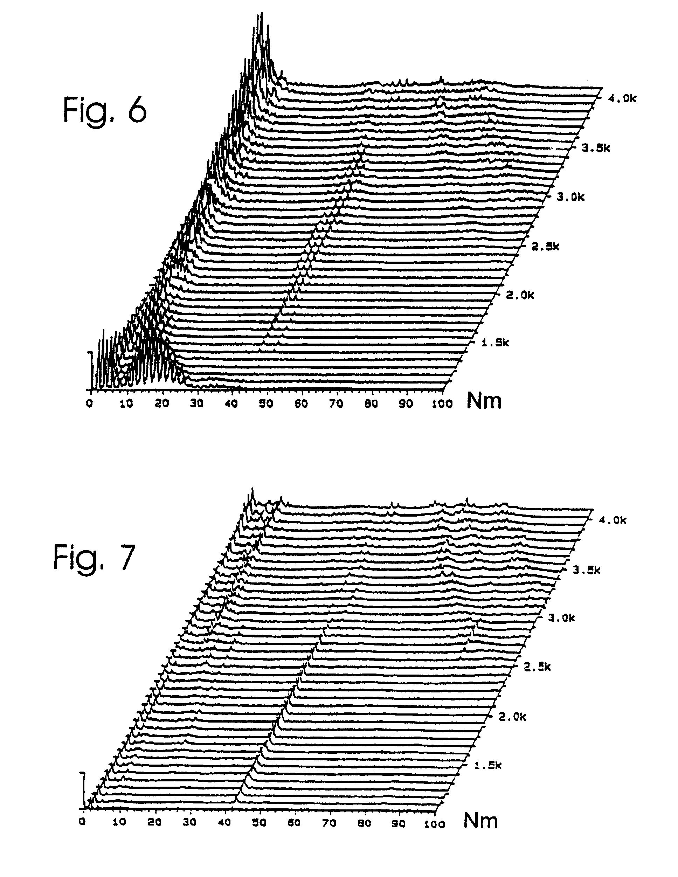

The effect of the coupling in a diesel engine with twin balancer shafts is shown in Figures 7 and 8. Figure 7 shows measured torque at the balancer shaft for an engine with a solid mounting of the sprocket 11 to the crankshaft over a range of engine speeds. Figure 8 shows the same measurement on an engine with the compliant sprocket coupling of the invention. Note the very substantial reduction in the torque variation and hence in the stresses in the chain over a wide range of engine speeds and loads. The coupling works by absorbing shock loads from the crankshaft that occur twice per revolution corresponding to combustion events in the engine. The shock loads are greatly attenuated by the time the torque reaches the chain. It is not sufficient merely to cushion the shock loads. The coupling should have a damping characteristic and substantial non-linearity to avoid resonance at any engine speed. The coupling of the invention provides such a characteristic and moreover, it does so within such a small volume that it can be packaged at the end of the crankshaft without any increase of the overall engine length.

## Claims

1. A coupling (10) for connecting a sprocket (11) or other driving element to a shaft (12), the driving element (11) being mounted on the shaft (12) for rotation relative thereto, comprising:
a coil spring (25) providing a driving connection between the shaft (12) and the driving element (11) and arranged to bias the driving element (11) to an intermediate position relative to the shaft (12);
**characterised by**:
friction means (32) having inwardly facing contact areas (35) in pressure contact with the coil spring (25), arranged to damp movement of the driving element (11) relative to the shaft (12).

2. A coupling as claimed in claim 1, **characterised in that** the spring (25) has a higher spring rate for displacement of the driving element (11) from the intermediate position in advance of the shaft (12) than for displacement of the shaft (12) in advance of the driving element (11).

3. A coupling as claimed in claim 1 or claim 2, **characterised in that** displacement of the driving element (11) relative to the shaft (12) from the intermediate position in advance of the shaft causes an increase in said pressure contact and hence the friction between the friction means (32) and the spring (25).

4. A coupling as claimed in claim 3, **characterised in that** the increased pressure contact between the spring (25) and the friction means 32 causes an increase in the spring rate.

5. A coupling as claimed in claim 1, in which the coil spring 25 is housed in an annular space between the shaft (12) and the driving element (11), one end (28) of the coil spring (25) being connected to the driving element (11) and the other end (27) to the shaft (12) so that relative displacement in one direction winds up the spring (25) and in the other unwinds the spring (25), **characterised in that** the friction means (32) comprises a friction ring within the annular space.

6. A coupling as claimed in claim 5, in which the inward facing contact areas (35) of the friction ring are angularly spaced and arranged so that both friction and spring rate increase as the coil spring (25) unwinds and decrease as the spring winds up.

7. A coupling as claimed in claim 6, in which the friction ring (32) is of resilient material and has outward facing contact areas (33), angularly spaced between the inward facing contact areas (35) and in pressure contact with the driving element (11).

8. An internal combustion engine having a chain and sprocket drive from its crankshaft in which a sprocket is mounted on the crankshaft by a coupling as claimed in any one of the preceding claims.

## Patentansprüche

1. Kupplung (10) zur Verbindung eines Kettenrades (11) oder anderen treibenden Elementes mit einer Welle (12), wobei das treibende Element (11) relativ zur Welle (12) verdrehbar auf dieser angebracht ist; folgendes aufweisend:
eine Schraubenfeder (25), welche eine Antriebsverbindung zwischen der Welle (12) und dem treibenden Element (11) herstellt und so angebracht ist, daß sie das treibende Element (11) in eine Zwischenstellung in bezug auf die Welle (12) vorspannt; **gekennzeichnet durch**:
Reibungsmittel (32) mit nach innen gerichteten Kontaktbereichen (35), die in Druckkontakt mit der Schraubenfeder (25) liegen, und die so angeordnet sind, daß sie die Bewegungen des treibenden Elementes (11) gegenüber der Welle (12) dämpfen.

2. Kupplung nach Anspruch 1, **dadurch gekennzeichnet, daß** die Feder (25) für eine Auslenkung des treibenden Elementes (11) aus der Zwischenstellung in eine der Welle (12) gegenüber voreilende Stellung eine höhere Federkonstante aufweist als für eine Auslenkung der Welle (12) in eine dem treibenden Element (11) gegenüber voreilende Stellung.

3. Kupplung nach Anspruch 1 oder 2, **dadurch gekennzeichnet, daß** eine Auslenkung des treibenden Elementes (11) gegenüber der Welle (12) aus der Zwischenstellung in eine der Welle gegenüber voreilende Stellung eine Erhöhung des besagten Druckkontaktes und damit der Reibung zwischen den Reibungsmitteln (32) und der Feder (25) ergibt.

4. Kupplung nach Anspruch 3, **dadurch gekennzeichnet, daß** der verstärkte Druckkontakt zwischen der Feder (25) und den Reibungsmitteln (32) eine Erhöhung der Federkonstante bewirkt.

5. Kupplung nach Anspruch 1, worin die Schraubenfeder (25) in einem Ringraum zwischen der Welle (12) und dem treibenden Element (11) gelagert ist, wobei ein Ende der Schraubenfeder (25) mit dem treibenden Element (11) und das andere Ende (27) mit der Welle verbunden ist, so daß eine Relativbewegung in der einen Richtung die Feder (25) aufwickelt und in der anderen Richtung die Feder (25) abwickelt,
**dadurch gekennzeichnet, daß** die Reibungsmittel (32) von einem Reibring in dem Ringraum gebildet werden.

6. Kupplung nach Anspruch 5, worin die nach innen gekehrten Kontaktbereiche (35) des Reibringes im Winkel beabstandet angeordnet und so eingerichtet sind, daß sowohl die Reibung als auch die Federkonstante zunimmt, wenn die Schraubenfeder (25) abgewickelt wird, und daß sie abnehmen, wenn die Feder aufgewickelt wird.

7. Kupplung nach Anspruch 6, in welcher der Reibring (32) aus federndem Material hergestellt ist und nach außen gekehrte Kontaktbereiche (33) aufweist, die in einem Winkelabstand von den nach innen gekehrten Kontaktbereichen (35) zwischen diesen angeordnet sind und in Druckkontakt mit dem treibenden Element (11) stehen.

8. Brennkraftmaschine mit einem von seiner Kurbelwelle ausgehenden Ketten- und Kettenradgetriebe, worin ein Kettenrad über eine nach einem beliebigen der vorangehenden Ansprüche ausgebildete Kupplung an der Kurbelwelle angebracht ist.

## Revendications

1. Couplage (10) destiné à relier un pignon à chaîne (11) ou un autre élément d'entraînement à un arbre (12), l'élément d'entraînement (11) étant monté sur l'arbre (12) en vue d'une rotation par rapport à celui-ci, comprenant :
un ressort hélicoïdal (25) fournissant une liaison d'entraînement entre l'arbre (12) et l'élément d'entraînement (11) et agencé pour solliciter l'élément d'entraînement (11) à une position intermédiaire par rapport à l'arbre (12), **caractérisé par** :
un moyen de frottement (32) présentant des zones de contact faisant face vers l'intérieur (35) en contact par pression avec le ressort hélicoïdal (25), agencé pour amortir le déplacement de l'élément d'entraînement (11) par rapport à l'arbre (12).

2. Couplage selon la revendication 1, **caractérisé en ce que** le ressort (25) présente une constante de rappel plus élevée pour le déplacement de l'élément d'entraînement (11) depuis la position intermédiaire avant l'arbre (12) que pour le déplacement de l'arbre (12) avant l'élément d'entraînement (11).

3. Couplage selon la revendication 1 ou la revendication 2, **caractérisé en ce que** le déplacement de l'élément d'entraînement (11) par rapport à l'arbre (12) depuis la position intermédiaire avant l'arbre amène une augmentation dudit contact par pression et donc du frottement entre le moyen de frottement (32) et le ressort (25).

4. Couplage selon la revendication 3, **caractérisé en ce que** le contact par pression accru entre le ressort (25) et le moyen de frottement (32) provoque une augmentation de la constante de rappel.

5. Couplage selon la revendication 1, dans lequel le ressort hélicoïdal (25) est logé dans un espace annulaire entre l'arbre (12) et l'élément d'entraînement (11), une première extrémité (28) du ressort hélicoïdal (25) étant reliée à l'élément d'entraînement (11) et l'autre extrémité (27) à l'arbre (12) de sorte que le déplacement relatif dans une direction bande le ressort (25) et dans l'autre détend le ressort (25), **caractérisé en ce que** le moyen de frottement (32) comprend une bague de frottement à l'intérieur de l'espace annulaire.

6. Couplage selon la revendication 5, dans lequel les zones de contact faisant face vers l'intérieur (35) de la bague de frottement sont angulairement espacées et agencées de sorte qu'à la fois le frottement et la constante de rappel du ressort augmentent à mesure que le ressort hélicoïdal (25) se détend et diminuent à mesure que le ressort se bande.

7. Couplage selon la revendication 6, dans lequel la bague de frottement (32) est d'un matériau élastique et présente des zones de contact faisant face vers l'extérieur (33), angulairement espacées entre les zones de contact faisant face vers l'intérieur (35) et en contact par pression avec l'élément d'entraînement (11).

8. Moteur à combustion interne comportant un entraînement par chaînes et par pignons à chaîne à partir de son vilebrequin, dans lequel un pignon à chaîne est monté sur le vilebrequin au moyen d'un couplage selon l'une quelconque des revendications précédentes.
